# EUROPÄISCHE PATENTSCHRIFT

(11) **EP 2 998 158 B1**
(45) Veröffentlichungstag und Bekanntmachung des Hinweises auf die Patenterteilung: **12.07.2017**
(21) Anmeldenummer: 14195721.7
(22) Anmeldetag: 01.12.2014
(51) Int. Cl.: B60P 3/075, B60P 3/077

(54) **Lochblechfahrbahn**
Perforated sheet path
Voie de circulation en tôle perforée

(43) Veröffentlichungstag der Anmeldung: 23.03.2016
(73) Patentinhaber: FMS Fahrzeugbau GmbH, 19230 Hagenow (DE)
(72) Erfinder: Friemann, Dirk, 19230 Hagenow (DE)
(74) Vertreter: Knoop, Philipp

(56) Entgegenhaltungen:
- DE-T2- 69 705 740
- US-A1- 2008 170 923
- US-A1- 2008 232 918
- US-A1- 2012 257 942

## Beschreibung

Die vorliegende Erfindung betrifft ein Lochblech, vorzugsweise für Sattelauflieger, Anhänger und/oder Motorwagen, insbesondere für Fahrzeugtransporte, mit einer Ladegutfläche, auf welche eine Ladung aufbringbar ist, wie z.B. in US2008/0232918 A1 offenbart. Die Erfindung betrifft außerdem einen Motorwagen für Fahrzeugtransporte.

Schließlich betrifft die vorliegende Erfindung einen Ladungssicherungssatz, mit mindestens einem Lochblech mit einer Ladegutfläche, auf welche eine Ladung aufbringbar ist, mindestens einer unterhalb der Ladegutfläche anordenbaren Zurrwiderlagervorrichtung sowie mindestens einem Zurrgurt, wobei das Lochblech nach einem der Ansprüche 1 bis 11 ausgestaltet ist.

Lochbleche der eingangs genannten Art werden, häufig in der Form von Fahrbahn-Lochblechen auf Anhängern, Sattelaufliegern oder Motorwagen, seit langem verwendet. Sie sind in Ausgestaltungen mit unterschiedlichen Lochabständen erhältlich. Günstig bei herkömmlichen Lochblechen ist, dass sie aufgrund des Lochrasters ein vergleichsweise geringes Gewicht aufweisen. Außerdem stellt das Lochraster bei herkömmlichen Lochblechen sicher, dass Flüssigkeiten, insbesondere Regenwasser, ablaufen kann und sich daher nicht auf der Ladegutfläche ansammelt.

In der Praxis werden die bekannten Lochbleche darüber hinaus jedoch auch zur Sicherung der Ladung verwendet. Insbesondere bei Fahrzeugtransporten dienen im Abstand der Spurweite des zu transportierenden Fahrzeugs herkömmliche Lochbleche als Lochblechfahrbahn, auf welche das zu transportierende Fahrzeug aufgefahren wird. Zur Sicherung des Fahrzeugs wird dabei ein Zurrgurt um die Reifenlauffläche geführt. Der Zurrgurt wird üblicherweise an den Enden direkt oder mit Zwischenhaken in Löcher der Lochblechfahrbahn eingehakt. Außerdem werden sogenannte Radanschläge in die definierten Löcher der Lochblechfahrbahn eingehängt und in diesen verriegelt. Diese Art der Ladungssicherung ist jedoch mit Nachteil häufig nicht ausreichend sicher. Insbesondere kann auf die beschriebene Weise häufig aktuellen oder zukünftigen gesetzlichen Vorgaben für die Ladungssicherung nicht oder nicht in vollem Umfang entsprochen werden. Dies ist im Wesentlichen darauf zurückzuführen, dass das Lochblech und das in der Ladegutfläche ausgeformte Lochraster weder für die Halterung eines Zurrgurtes oder Hakens noch zur Aufnahme der beim Verzurren und während des Transports auftretenden Kräfte senkrecht und quer zur Ladegutfläche ausgelegt sind. Daher kann es im ungünstigsten Falle dazu kommen, dass die Lochblechfahrbahn an den Anbringpunkten des Hakens oder des Gurtes reißt. Aber selbst, wenn es nicht zu diesem Extremfall kommt, ist die Anbringung eines Hakens in dem Lochraster häufig nur in für die Kraftaufnahme ungünstigen Winkeln möglich. Die Folge ist mit Nachteil eine Verringerung der effektiven Zurrkräfte, die das Ladegut auf die Ladegutfläche drücken.

Vor dem geschilderten Hintergrund liegt der vorliegenden Erfindung die Aufgabe zu Grunde, ein Lochblech der eingangs genannten Art, einen Motorwagen für Fahrzeugtransporte der eingangs genannten Art gleichermaßen wie einen Ladungssicherungssatz der oben genannten Art anzugeben, welche eine verbesserte Ladungssicherung unter Umgehung der geschilderten Nachteile des Standes der Technik ermöglichen.

Diese Aufgabe wird erfindungsgemäß mit einem gattungsgemäßen Lochblech gelöst, welches mit mindestens einer unterhalb der Ladegutfläche angeordneten Zurrwiderlagervorrichtung mit Aufnahmemitteln zur Aufnahme durch Zurrmittel, insbesondere Haken und/oder Zurrgurt, erzeugbarer, rechtwinklig zur Ladegutfläche wirkender, Kräfte versehen ist, wobei die Ladefläche mindestens eine Aussparung zum Durchführen der Zurrmittel zu den Aufnahmemitteln der Zurrwiderlagervorrichtung aufweist und wobei die Aussparung eine im wesentlichen in Längsrichtung des Lochblechs ausgerichtete, im wesentlichen ovale, Form aufweist. Erfindungsgemäß wird mit Vorteil eine Entlastung des Lochblechs mit der Ladegutfläche erreicht. Dadurch, dass die Zurrkräfte, also alle Kräfte, welche senkrecht zur Ladegutfläche wirken, bei dem erfindungsgemäßen Lochblech von der Zurrwiderlagervorrichtung aufgenommen werden, kann die Zurrwiderlagervorrichtung hinsichtlich Biegesteifigkeit und sonstiger Anforderungen auf die Aufnahme der Zurrkräfte optimiert werden. Gleichzeitig werden erfindungsgemäß an das Lochblech keine erhöhten Anforderungen hinsichtlich der Belastbarkeit durch Kräfte senkrecht zur Ladegutfläche gestellt. Das Lochblech selber kann daher mit Vorteil aus einem leichteren Material hergestellt sein. Aufgrund der erfindungsgemäßen Zurrwiderlagervorrichtung muss das Lochblech lediglich den nötigen Gripp, also den erforderlichen Gleitreibbeiwert, bereitstellen, welcher ein Rutschen entlang der Ladegutfläche verhindert, und welcher während des Transports auftretenden seitlichen Beschleunigungskräften entgegenwirkt.

Die Zurrwiderlagervorrichtung kann im Rahmen der Erfindung auch in das Lochblech eingebettet sein. Beispielsweise kann das Lochblech eine Vertiefung aufweisen, in welche die Zurrwiderlagervorrichtung derart eingepasst ist, dass eine Fläche der Zurrwiderlagervorrichtung mit der Ladegutfläche im wesentlich bündig auf einer Höhe angeordnet ist.

In vorteilhafter Ausgestaltung der Erfindung ist mindestens eine Erstreckung der Zurrwiderlagervorrichtung größer ausgestaltet als ein Abstand zwischen in der Ladegutfläche ausgeformten Löchern. In Ausgestaltungen, bei denen sich die Zurrwiderlagervorrichtung an der Unterseite der Ladefläche des Lochblechs abstützt, wird die Angriffsfläche der rechtwinklig zur Ladefläche wirkenden Kräfte gemäß dieser Ausgestaltung der Erfindung mit Vorteil vergrößert im Vergleich zu der herkömmlichen Verwendung der Löcher des Lochrasters des Lochblechs zur Anbringung der Zurrmittel. Bei dem Fall der direkten Verwendung der Löcher des Lochrasters der Ladefläche des Lochblechs zur Verankerung von Haken oder Zurrgurten lastet demgegenüber die Zurrkraft letztlich nur an dem Element der Ladefläche, welches durch angrenzende Löcher abgegrenzt ist.

Besonders günstig ist es in weiterer vorteilhafter Ausgestaltung der Erfindung, wenn die Ladefläche wenigstens in einem Bereich oberhalb der Zurrwiderlagervorrichtung eine zur ausreichenden Sicherung der Ladung gegenüber Verrutschen auf der Ladefläche ausgelegten Gleitreibbeiwert aufweist. Dies kann mit dem Fachmann für sich genommen bekannten Mitteln erreicht werden. Beispielsweise kann eine Aufrundung der Oberfläche vorgenommen werden oder es können über die eigentliche Ladefläche erhabene Umrandungen der Löcher des Lochblechs vorgesehen sein. Erfindungsgemäß kann das Lochblech mit Vorteil im Wesentlichen auf die Bereitstellung eines geeigneten Gleitreibbeiwertes optimiert werden, da ein Einwirken der Zurrkräfte auf die Ladefläche erfindungsgemäß entfällt.

Insbesondere kann das erfindungsgemäße Lochblech in einer bevorzugten Ausgestaltungsform als Fahrspurblech ausgestaltet sein. Das Lochblech kann dann paarweise auf einem Anhänger oder Sattelauflieger oder Motorwagen in einem Abstand entsprechend der Fahrspur des zu transportierenden Fahrzeugs befestigt sein und das zu transportierende Fahrzeug kann auf das Fahrspurblech rollen. Dabei genügt es, dass das Lochblech zur Aufnahme im Wesentlichen lediglich der Gewichtskraft des zu transportierenden Fahrzeugs ausgelegt ist. Nicht erforderlich ist mit Vorteil, dass das Lochblech darüber hinaus auch die Zurrkräfte aushalten kann.

Besonders günstig ist es, wenn im Rahmen der Erfindung die Zurrwiderlagervorrichtung eine größere Biegesteifigkeit in Richtung senkrecht zur Ladefläche aufweist als das Lochblech. Auf diese Weise ist es im Rahmen der Erfindung möglich, das Lochblech insbesondere gewichtsoptimiert auszulegen und lediglich sicherzustellen, dass die Ladefläche einen ausreichenden Gleitreibbeiwert aufweist. Denn gemäß dieser Ausgestaltung der Erfindung können die Kräfte rechtwinklig zur Ladefläche aufgrund der größeren Biegesteifigkeit im Wesentlichen ausschließlich von der Zurrwiderlagervorrichtung aufgenommen werden. Mit Vorteil können erfindungsgemäß kräfteaufnehmende Elemente der Zurrwiderlagervorrichtung aus einem anderen Werkstoff hergestellt sein als das Lochblech. Auf diese Weise kann erfindungsgemäß die Zurrwiderlagervorrichtung hinsichtlich der Materialwahl optimal ausgelegt werden, um die Zurrkräfte aufzunehmen. Unabhängig davon kann das Lochblech hinsichtlich der Auswahl des Werkstoffs so ausgelegt werden, dass es einerseits den erforderlichen Gleitreibbeiwert bereitstellt und andererseits die Gewichtskraft der Ladung, nicht jedoch die deutlich höhere Zurrkraft, aufnehmen kann. Die Ausgestaltung des erfindungsgemäßen Lochblechs sieht vor, dass die Ladefläche mindestens eine Aussparung zum Durchführen der Zurrmittel zu den Aufnahmemitteln der Zurrwiderlagervorrichtung aufweist. Diese Maßnahme stellt erfindungsgemäß mit Vorteil sicher, dass Zurrkräfte im Bereich der Verbindung zwischen den Zurrmitteln und den Aufnahmemitteln nicht auf das Lochblech übertragen werden.

Um Haken und/oder Zurrgurte durch die Aussparungen durchführen zu können, ist in Ausgestaltung der Erfindung vorgesehen, dass die Aussparung eine im Wesentlichen in Längsrichtung des Lochblechs ausgerichtete, im Wesentlichen ovale Form aufweist. Bei geeigneter Dimensionierung der Aussparung ermöglicht die Ausrichtung in Längsrichtung bzw. ovale Ausgestaltung die vollständige Durchführung eines Hakens oder Zurrgurts, ohne dass der Haken bzw. der Zurrgurt den Durchführungsbereich die Ladefläche berührt.

Wenn die Zurrwiderlagervorrichtung zwei oder mehr Aufnahmemittel aufweist, welche derart voneinander beabstandet auf der Zurrwiderlagervorrichtung angeordnet sind, dass jedes Aufnahmemittel den mit einer der Aussparungen in der Ladefläche in Deckung anordenbar ist, kann mit Vorteil eine Ladung, insbesondere das Rad eines Fahrzeugs, über zwei Punkte derselben Zurrwiderlagervorrichtung auf der Ladefläche des Lochblechs fixiert werden. Die Ladefläche wird bei dieser Ausgestaltung zwischen der Zurrwiderlagervorrichtung und der Ladung sandwichartig eingeklemmt, sodass ein Verbiegen der Ladefläche aufgrund der senkrecht zur Ladefläche wirkenden Zurrkräfte im Wesentlichen unterbunden werden kann.

In diesem Zusammenhang ist es in Ausgestaltung der Erfindung günstig, wenn der Abstand zwischen den Aufnahmemitteln an eine äußere Abmessung der Ladung, insbesondere an einen Raddurchmesser eines Fahrzeugs, angepasst ist. Dadurch ist es mit Vorteil möglich, Haken bzw. Zurrgurte derart an den Aufnahmemitteln der Zurrwiderlagervorrichtung zu befestigen, dass die angreifenden Zurrkräfte im Wesentlichen im rechten Winkel zur Ladefläche ausgerichtet sind.

Im Rahmen der Erfindung hat es sich als besonders günstig erwiesen, wenn die Zurrwiderlagervorrichtung ein Profilelement aufweist. Beispielsweise kann ein gekantetes Profil aus Stahl oder einem anderen ausreichend biegefesten Werkstoff eingesetzt werden, welches mit einer Längsfläche in Anlage mit der Unterseite der Ladefläche des Lochblechs gebracht werden kann. Die vorteilhaften Eigenschaften eines Profilelements in Bezug auf die Biegesteifigkeit werden auf diese Weise mit Vorteil auch auf das Lochblech transferiert, ohne dass das Lochblech für sich genommen über eine ausreichend große Biegesteifigkeit gegenüber den Zurrkräften verfügen muss.

In bevorzugter Ausgestaltung der Erfindung sind die Aufnahmemittel zur formschlüssigen Aufnahme des Zurrmittels ausgestaltet. Insbesondere können Rundeisen oder ähnlich geformte Bauteile, vorzugsweise in einem Profilelement quer zu dessen Längsachse angeordnet, als Aufnahmemittel nach der Erfindung eingesetzt werden. Das Rundeisen kann bei geeigneter Auslegung einen Formschluss mit dem Hakengrund ausbilden, um eine optimale Einleitung der Zurrkräfte auf die Zurrwiderlagervorrichtung zu erhalten. Im Prinzip kann im Rahmen der Erfindung das Rundeisen auch zur formschlüssigen Führung eines Zurrgurts verwendet werden. Alternativ zu einem Rundeisen ist im Rahmen der Erfindung auch ein Vierkantprofil geeignet, wenn geeignet geformte Haken eingesetzt werden, um einen Formschluss zu bilden.

Gemäß einer bevorzugten Variante der Erfindung ist die Zurrwiderlagervorrichtung gegenüber der Ladefläche verschiebbar angeordnet, um die Aufnahmemittel mit unterschiedlichen Aussparungen in der Ladefläche in Deckung zu bringen. Je nachdem, wo auf der Ladefläche des Lochblechs die Ladung aufgebracht ist und wo sie dementsprechend zu sichern ist, kann gemäß dieser Ausgestaltung der Erfindung die Zurrwiderlagervorrichtung in Stellung gebracht werden, um die Ladung zu sichern.

Zur Befestigung der Zurrwiderlagervorrichtung mit der Ladefläche des Lochblechs können in Ausgestaltung der Erfindung Befestigungsmittel zum, vorzugsweise sandwichartigen, Befestigen der Zurrwiderlagervorrichtung unterhalb der Ladefläche vorgesehen sein. Die Befestigungsmittel können beispielsweise als quer zur Längsachse der Zurrwiderlagervorrichtung ausgestaltete Querstreben ausgestattet sein.

Die auf einen Motorwagen für Fahrzeugtransporte gerichtete Aufgabe wird erfindungsgemäß mit einem Motorwagen der eingangs genannten Art gelöst, welcher mindestens ein Lochblech nach einem der Ansprüche 1 bis 13 aufweist.

Die auf einen Ladungssicherungssatz gerichtete Aufgabe wird durch einen Ladungssicherungssatz der eingangs genannten Art gelöst, welcher die Merkmalskombination des Patentanspruchs 15 aufweist.

Erfindungsgemäß kann der Ladungssicherungssatz auch eine Zurrwiderlagervorrichtung umfassen, welche zwischen zwei Lochblechen angeordnet ist.

Die Erfindung wird in einer bevorzugten Ausführungsform unter Bezugnahme auf eine Zeichnung beispielhaft beschrieben, wobei weitere vorteilhafte Einzelheiten den Figuren der Zeichnung zu entnehmen sind.

Funktionsmäßig gleiche Teile sind dabei mit denselben Bezugszeichen versehen.

Die Figuren der Zeichnung zeigen im Einzelnen:
- Fig. 1:: schematische Skizze zur Veranschaulichung der Verwendung eines Lochbleches nach dem Stand der Technik zur Ladungssicherung;
- Fig. 2:: schematische Veranschaulichung der Verwendung eines erfindungsgemäßen Lochblechs zur Ladungssicherung, wobei die Darstellung jener gemäß Fig. 1 entspricht;
- Fig. 3:: perspektivische Darstellung in Blickrichtung von schräg oben auf ein erfindungsgemäßes Lochblech als Explosionszeichnung;
- Fig. 4:: perspektivische Darstellung von schräg unten auf den Gegenstand gemäß Fig. 3 in Blickrichtung des Pfeils IV in Fig. 3;
- Fig. 5:: perspektivische Ansicht von schräg oben auf eine andere Ausgestaltung eines erfindungsgemäßen Lochblechs.
- Fig. 6:: perspektivische Ansicht von schräg oben auf eine dritte

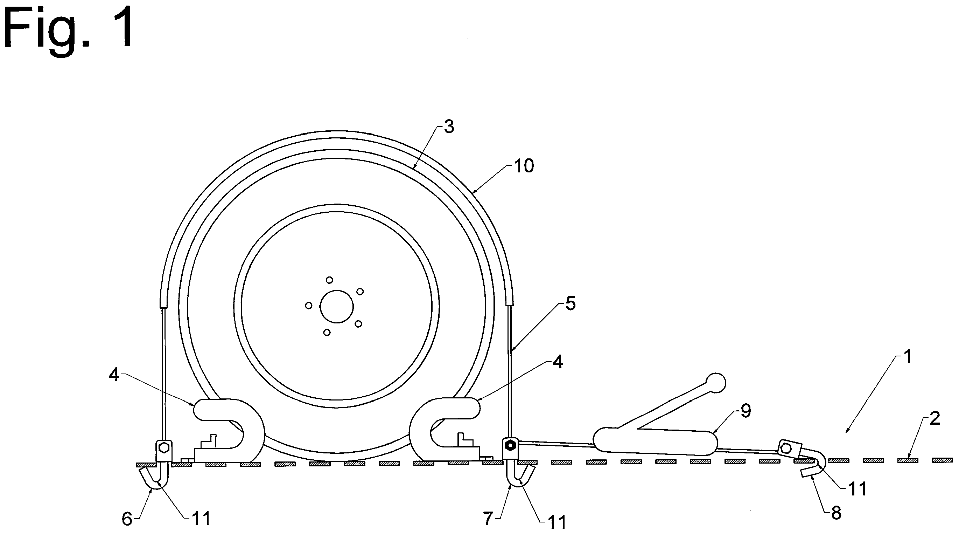

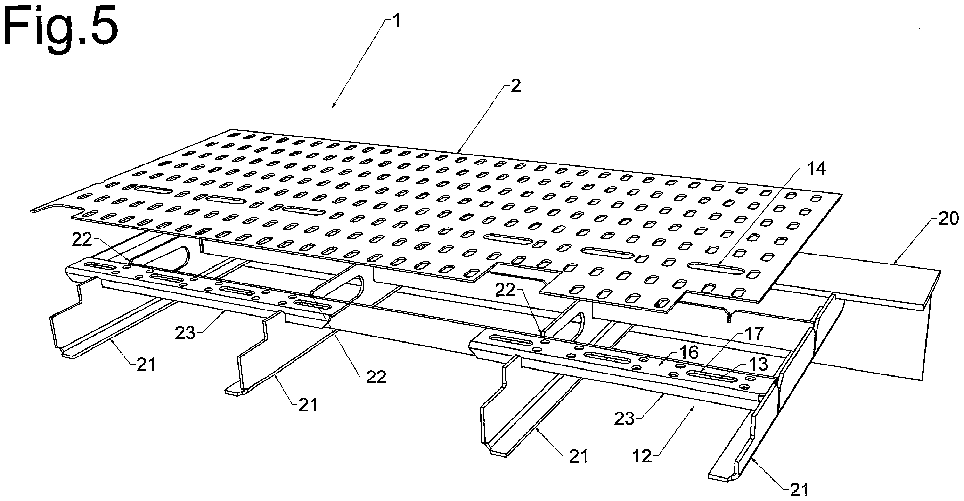

Ausgestaltung eines erfindungsgemäßen Lochblechs, wobei die Blickrichtung gegenüber jener aus Fig. 5 um etwa 90° gedreht ist.Zunächst ist mit Bezugnahme auf die Fig. 1 veranschaulicht, wie die Ladungssicherung der Fahrzeugtransporte gemäß Stand der Technik erfolgt. Fig. 1 zeigt in einer Seitenansicht, wobei die Horizontale senkrecht zur Zeichenebene verläuft, ein Fahrbahn-Lochblech 1 mit einem Lochraster. Das Lochraster ist in der Seitenansicht gemäß Fig. 1 als Unterbrechungen der Ladegutfläche 2 zu erkennen. Auf der Ladegutfläche 2 des Fahrbahn-Lochblechs 1 gemäß Stand der Technik ist ein Fahrzeug aufgebracht, von dem schematisch ein Rad 3 zu erkennen ist. Vor und hinter dem Rad 3 ist jeweils ein Radanschlag 4 im Fahrbahn-Lochblech 1 befestigt, um die Bewegung des Rads 3 des zu transportierenden Fahrzeugs entlang der Ladegutfläche 2 einzuschränken. Um den Umfang des Rads 3 ist ein Dreipunkt-Zurrgurt 5 gelegt. Der Dreipunkt-Zurrgurt 5 weist an den Enden jeweils einen Haken 6, 7, 8 auf. In einem Abschnitt des Dreipunkt-Zurrgurts 5 ist eine Ratsche 9 zum Spannen des Dreipunkt-Zurrgurts 5 vorgesehen. Um ein Verrutschen des Dreipunkt-Zurrgurts 5 gegenüber dem Rad 3 zu vermeiden, weist der Dreipunkt-Zurrgurt 5 an verschiedenen Positionen Abrutschhemmer 10 auf.

Wie in der Fig. 1 schematisch zu erkennen, sind die Haken 6, 7, 8 durch Löcher des Lochblechs 1 geführt und in diesen verankert. Dabei ist ersichtlich, dass ein Hakengrund 11 jeweils keinen Formschluss mit dem planen Fahrbahn-Lochblech 1 bildet. Die mit Bezug auf Fig. 1 schematisch veranschaulichte Art der Ladungssicherung gemäß dem Stand der Technik ist in vielen Fällen unzureichend. Denn das Fahrbahn-Lochblech 1 ist häufig nicht zur Aufnahme der Zurrkräfte, welche in Richtung der Flächennormalen der Ladegutfläche 2 auftreten, ausgelegt. Dies kann zu Verformungen oder Einreißen der Ladegutfläche 2 des Fahrbahn-Lochblechs 1 führen. Im ungünstigsten Falle löst sich einer der Haken 6, 7, 8 dabei vollständig von dem Fahrbahn-Lochblech 1, so dass die Zurrkraft vollständig entfällt.

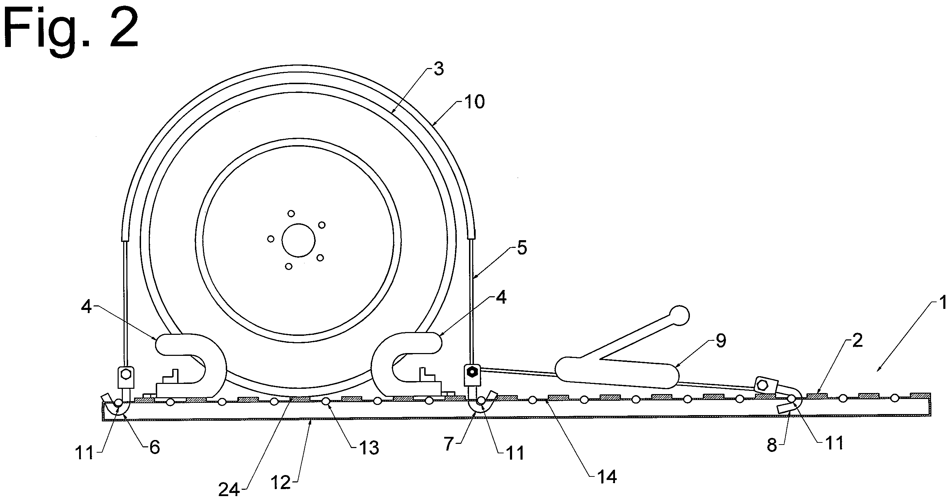

Vor diesem Hintergrund veranschaulicht die Fig. 2 schematisch das Prinzip der Erfindung anhand einer Ausgestaltungsform des erfindungsgemessen Fahrbahn-Lochblechs in dessen Verwendung zur Ladungssicherung. Die Darstellung gemäß Fig. 2 entspricht hinsichtlich der Perspektive und hinsichtlich einiger gezeigter Bauteile jener gemäß Fig. 1. Jedoch ist das Fahrbahn-Lochblech 1 gemäß der Erfindung abweichend von dem mit Bezug auf Fig. 1 skizzierten Stand der Technik, wie in Fig. 2 zu erkennen, mit einer Zurrwiderlagervorrichtung 12 versehen. Die Zurrwiderlagervorrichtung 12 ist unterhalb der Ladegutfläche 2 des Fahrbahn-Lochblechs 1 angeordnet. Sie weist Aufnahmemittel in Form von Rundeisen 13 auf. Die Rundeisen 13 sind in der Zurrwiderlagervorrichtung 12 in nicht näher dargestellter Weise, dem Fachmann jedoch wohl bekannt, gelagert, um die Zurrkräfte aufzunehmen.

Wie in Fig. 2 in der Seitenansicht gut zu erkennen, weist die Ladegutfläche 2 des erfindungsgemäßen Fahrbahn-Lochblechs 1 Aussparungen 14 zum Durchführen der Haken 6, 7, 8 auf. Die Aussparungen 14 sind oberhalb der Rundeisen 13 angeordnet und relativ zu diesen ausgerichtet, soweit sie mit den Haken 6, 7, 8 belegt sind. Die Fig. 2 zeigt, dass der Haken 6 am in der Figur linken Ende des Dreipunkt-Zurrgurts 5 durch die Aussparung 14 geführt ist und derart um das Rundeisen 13 gelegt ist, dass der Hakengrund 11 formschlüssig mit dem Rundeisen 13 verbunden ist. Entsprechendes gilt für den Haken 7 am Dreipunkt-Zurrgurt 5 sowie den Haken 8, welcher hinter der Ratsche 9 an Dreipunkt-Zurrgurt 5 befestigt ist und entsprechend ebenfalls durch die Aussparung 14 an einem Rundeisen 13 formschlüssig dem Hakengrund 11 verbunden ist.

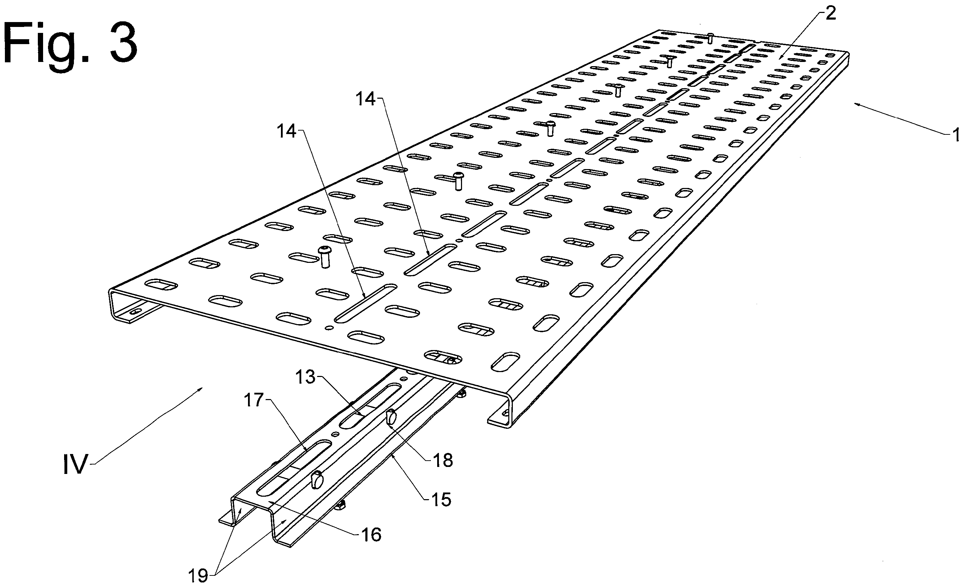

Die Fig. 3 zeigt in einer Explosionszeichnung in perspektivischer Ansicht von schräg oben eine bevorzugte Ausgestaltungsform eines Fahrbahn-Lochblechs 1 gemäß der Erfindung. Wie zu erkennen, ist das Fahrbahn-Lochblech 1 mit einer Ladegutfläche 2 zur Aufnahme der Ladung, insbesondere eines Fahrzeugs, ausgestaltet. In der Ladegutfläche 2 sind neben dem standardmäßigen Lochraster in Längsrichtung ausgedehnte oval förmige Aussparungen 14 in Abständen voneinander auf einer geraden Linie ausgerichtet ausgeformt. Im Bereich unterhalb der Ladegutfläche 2 weist das Fahrbahn-Lochblech 1 gemäß Fig. 3 erfindungsgemäß eine Zurrwiderlagervorrichtung 12 auf. Die Zurrwiderlagervorrichtung weist im Wesentlichen ein gekantetes Profilelement 15 auf. Das gekantete Profilelement 15 weist eine Anlagefläche 16 zum Anlegen an die Unterseite der Ladegutfläche 2 des Fahrbahn-Lochblechs 1 auf. Die Anlagefläche 16 kann an der Unterseite der Ladegutfläche 2 des Fahrbahn-Lochblechs 1 angeschweißt sein oder auf andere geeignete Weise mit dem Fahrbahn-Lochblech 1 verbunden sein. In der Anlagefläche 16 des gekanteten Profilelements 15 sind

Aussparungen 17 ausgeformt, deren Form und relative Lage zueinander den Aussparungen 14 in der Ladegutfläche 2 das Fahrbahn-Lochblechs 1 entsprechen. Die Aussparungen 17 in der Anlagefläche 16 des gekanteten Profilelements 15 sind somit zum Führen der Haken 6, 7, 8 des Dreipunkt-Zurrgurts 5 gemäß den Figuren 1 und 2 ausgelegt.

Im Bereich der Aussparungen 17 sind in Querrichtung zu dem gekanteten Profilelement 15 aus Stahl gefertigte Rundeisen 13 angeordnet. Die Rundeisen 13 sind in Längsrichtung der Aussparungen 17 mittig angeordnet. Die Lagerung der Rundeisen 13 erfolgt in Rundöffnungen 18 in den Seitenflächen 19 des gekanteten Profilelements 15.

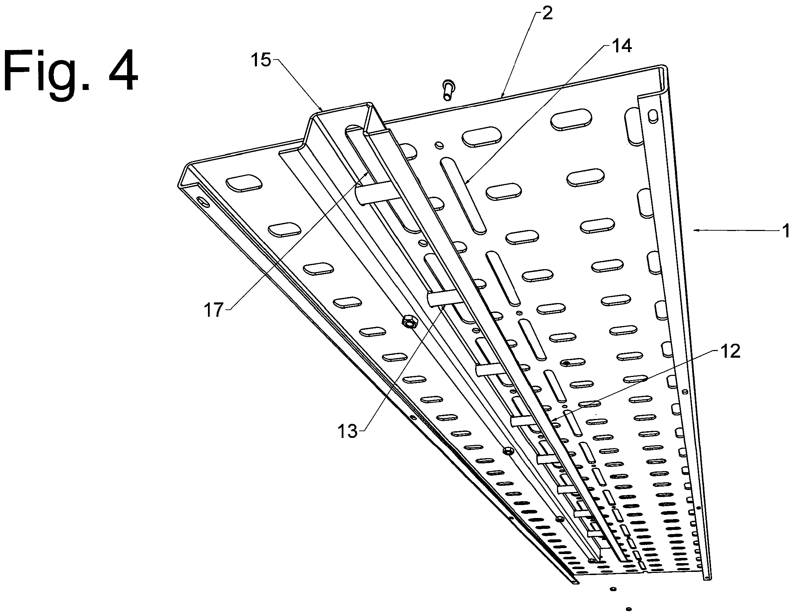

Fig. 4 zeigt das erfindungsgemäße Fahrbahn-Lochblech 1 gemäß Fig. 3 ebenfalls in einer Explosionsansicht, jedoch in einer Perspektive von schräg unten entlang der Blickrichtung des Pfeils IV aus Fig. 3.

Fig. 5 zeigt eine andere bevorzugte Ausgestaltungsform eines Fahrbahn-Lochblechs 1 nach der Erfindung. Wie in der teilweise zerlegten Darstellung ersichtlich, weist das erfindungsgemäße Fahrbahn-Lochblech 1 eine Ladegutfläche 2 mit einem Lochraster auf. Zusätzlich zu dem herkömmlichen Lochraster sind in der Ladegutfläche 2 längliche ovale Aussparungen 14 ausgeformt. Die Ladegutfläche 2 ist zum Auflegen auf einen Rahmen 20 vorgesehen. Der Rahmen 20 besteht im Wesentlichen aus Querstreben 21. Die Querstreben 21 weisen jeweils eine Aufnahmefassung 22 auf, in welche ein gekantetes Profilelement 23 eingelegt ist. Das gekantete Profilelement 23 ist funktional im Wesentlichen analog zu den gekanteten Profilelement 15 des erfindungsgemäßen Fahrbahn-Lochblechs 1 gemäß den Figuren 3 und 4 ausgestaltet. Unterhalb von Aussparungen 17 in der Anlagefläche 16 des gekanteten Profilelements 23 sind ebenfalls Rundeisen 13 angeordnet. Im fertig montierten Zustand wird das Fahrbahn-Lochblech 1 mit der Ladegutfläche 2 derart auf den Rahmen 20 aufgesetzt, dass die Aussparungen 14 in der Ladegutfläche 2 in Deckung mit den Aussparungen 17 in der Anlagefläche 16 der gekanteten Profilelemente 23 stehen.

Wie in Fig. 5 zu erkennen, sind gemäß diesem Ausführungsbeispiel zwei baugleiche gekantete Profilelemente 23 vorgesehen.

Die Länge des gekanteten Profilelements und insbesondere ein Abstand zwischen Rundeisen 13 und Aussparungen 17 ist dabei in etwa angepasst an die Breite der zu sichernden Ladung. Bezugnehmend auf die schematische Veranschaulichung der Verwendung des erfindungsgemäßen Fahrbahn-Lochblechs 1 gemäß Fig. 2 bedeutet dies, dass der Abstand zwischen dem Grundelement 13, an welchem der Haken 6 anliegt, und dem Grundelement 13, an welchem der Haken 7 anliegt, in etwa dem Raddurchmesser inklusive Bereifung entspricht. Hierdurch ergibt sich der Vorteil, dass die Zurrkräfte in Richtung der Flächennormalen der Ladegutfläche 2 angreifen. Andererseits erfolgt keine Biegebelastung der Ladegutfläche 2. Denn das Material, aus welchem jeweils erfindungsgemäß die Zurrwiderlagervorrichtung 12 hergestellt ist, ist erheblich biegesteifer als die Ladegutfläche 2 ausgestaltet. Beim Festzurren des Dreipunkt-Zurrgurts 5, in der in Fig. 2 skizzierten Anordnung, erhöht sich der Anpressdruck und damit die Reibung in einem Auflagebereich 24, in welchem das Rad 3 auf der Ladegutfläche 2 aufliegt.

Auf diese Weise ist erfindungsgemäß ein verbessertes Fahrbahn-Lochblech 1 vorgeschlagen, welches die Sicherung von Ladungen auf der Ladegutfläche 2 verbessert, indem insbesondere das Lochblech selber im Wesentlichen von der Zurrkraft entlastet wird und daher lediglich zur Bereitstellung einer Reibung ausgelegt werden muss.

Fig. 5 zeigt eine dritte bevorzugte Ausgestaltungsform eines Fahrbahn-Lochblechs 1 nach der Erfindung. Zu erkennen ist, dass eine Ladegutfläche 2 auf einem Rahmen 20 montiert ist. Die Ladegutfläche 2 weist ovale Aussparungen 14 auf. Unterhalb der Ladegutfläche 2 des Fahrbahn-Lochblechs 1 ist eine Zurrwiderlagervorrichtung 12 angeordnet. Die Zurrwiderlagervorrichtung 12 ist auf Querstreben 21 des Rahmens 20 unterhalb der Ladegutfläche 2 angeordnet.

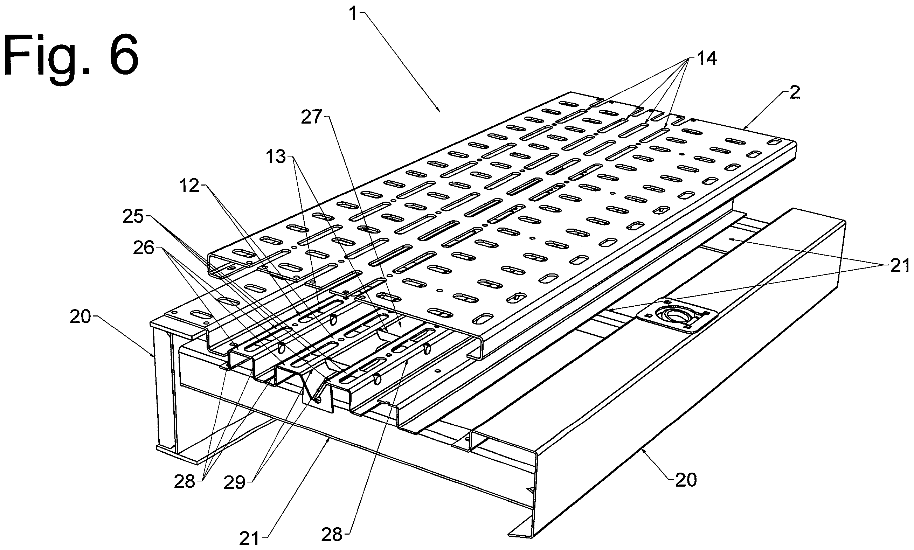

Die Zurrwiderlagervorrichtung 12 gemäß Fig. 6 weist als Kernstück ebenfalls ein gekantetes Profilelement 25 auf. Das gekantete Profilelement 25 gemäß der Ausgestaltungsform nach Fig. 6 ist derart ausgeformt, dass es zwei Anlageflächen 26 zum Anlegen an der Unterseite der Ladegutfläche 2 des Fahrbahn-Lochblechs 1 aufweißt. Die beiden Anlageflächen 26 verlaufen in Längsrichtung das gekanteten Profilelements 25 und sind durch einen im Querschnitt V-förmig ausgeformten Abschnitt 27 des gekanteten Profilelements 25 voneinander beabstandet. Der V-förmige Abschnitt 27 weist eine Breite auf, die ein Einführen eines Hakens ermöglicht.

Durch die Anlageflächen 26 nach außen jeweils begrenzende Flächenabschnitte 28 sowie durch die Anlageflächen 26 nach innen begrenzende, den V-förmigen Abschnitt 27 bildende Flächenabschnitte 29 hindurch sind in Querrichtung zu dem gekanteten Profilelement 25 aus Stahl gefertigte Rundeisen 13 angeordnet. Die Lagerung der Rundeisen 13 erfolgt in Rundöffnungen in den Flächenabschnitten 28, 29 des Profilelements 25.

Diese Ausgestaltungsform des Zurrwiderlagerelements 12 hat gegenüber den Ausgestaltungen mit dem gekanteten Profilelement 15 gemäß Fig. 3 und 4 bzw. dem gekanteten Profilelement 23 gem. Fig. 5 den Vorzug, dass die Rundeisen 13 über die gesamte Längserstreckung des Profilelements 25 zugänglich sind. Demgegenüber ist bei den vorgenannten Profilelementen 15, 23 die Zugänglichkeit auf den Bereich der Aussparungen 17 begrenzt. Außerdem zeichnet sich die Ausformung des gekanteten Profilelements 25 insbesondere durch den V-förmigen Abschnitt 27 durch eine besonders große Biegesteifigkeit aus.

In den Anlageflächen 26 des gekanteten Profilelements 25 sind Aussparungen 17 ausgeformt, deren Form und relative Lage zueinander den Aussparungen 14 in der Ladegutfläche 2 des Fahrbahn-Lochblechs 1 entsprechen. Die Aussparungen 17 in den Anlageflächen 26 des gekanteten Profilelements 25 sind somit zum Führen der Haken 6, 7, 8 des Dreipunkt-Zurrgurts 5 gemäß den Figuren 1 und 2 ausgelegt.

In der in Fig. 6 gezeigten Ausgestaltungsform der Erfindung weist die Ladegutfläche 2 des Fahrbahn-Lochblechs 1 drei parallel in Längsrichtung der Ladegutfläche 2 verlaufende Reihen ovaler Aussparungen 14 auf. Gemäß dieser Ausgestaltungsform ist es daher möglich, an einen gegebenen Zurrpunkt jeweils bis zu drei Haken 6, 7, 8 durch die jeweiligen Aussparungen 14 in der Ladegutfläche 2 zu führen und an den darunter liegenden Rundeisen 13 zu verankern. Dabei werden die Haken 6, 7, 8 im Falle der beiden äußeren Aussparungen 14 auch durch die Aussparung 17 in den Anlageflächen 26 geführt. Im Falle der mittleren Aussparung 14 wird der Haken 6, 7, 8 in den V-förmigen Abschnitt 27 des gekanteten Profilelements 25 gebracht, um an das Rundeisen 13 herangeführt zu werden.

### BEZUGSZEICHENLISTE

- 1: Fahrbahn-Lochblech
- 2: Ladegutfläche
- 3: Rad
- 4: Radanschlag
- 5: Dreipunkt-Zurrgurt
- 6: Haken
- 7: Haken
- 8: Haken
- 9: Ratsche
- 10: Abrutschhemmer
- 11: Hakengrund
- 12: Zurrwiderlagervorrichtung
- 13: Rundeisen
- 14: Aussparung
- 15: gekantetes Profilelement
- 16: Anlagefläche
- 17: Aussparung
- 18: Rundöffnung
- 19: Seitenfläche
- 20: Rahmen
- 21: Querstreben
- 22: Aufnahmefassung
- 23: gekantetes Profilelement
- 24: Auflagebereich
- 25: gekantetes Profilelement
- 26: Anlagefläche
- 27: V-förmiger Abschnitt
- 28: Flächenabschnitt
- 29: Flächenabschnitt

## Patentansprüche

1. Lochblech (1), vorzugsweise für Sattelauflieger, Anhänger und/oder Motorwagen, insbesondere für Fahrzeugtransporte, mit einer Ladefläche (2), auf welche eine Ladung (3) aufbringbar ist, wobei es mit mindestens einer, unterhalb der Ladefläche (2) angeordneten, Zurrwiderlagervorrichtung (12) mit Aufnahmemitteln (13) zur Aufnahme durch Zurrmittel (5, 6, 7, 8), insbesondere Haken (6, 7, 8) und/oder Zurrgurt (5), erzeugbarer, rechtwinklig zur Ladefläche (2) wirkender, Kräfte versehen ist, wobei die Ladefläche (2) mindestens eine Aussparung (14) zum Durchführen der Zurrmittel zu den Aufnahmemitteln (13) der Zurrwiderlagervorrichtung (12) aufweist und wobei die Aussparung (14) eine im wesentlichen in Längsrichtung des Lochblechs (1) ausgerichtete, im wesentlichen ovale, Form aufweist.

2. Lochblech (1) nach Anspruch 1, **dadurch gekennzeichnet, dass** mindestens eine Erstreckung der Zurrwiderlagervorrichtung (12) größer ausgestaltet ist als ein Abstand zwischen in der Ladefläche (2) ausgeformten Löchern.

3. Lochblech (1) nach Anspruch 1 oder 2, **dadurch gekennzeichnet, dass** die Ladefläche (2) wenigstens in einem Bereich oberhalb der Zurrwiderlagervorrichtung (12) eine zur ausreichenden Sicherung der Ladung (3) gegenüber Verrutschen auf der Ladefläche (2) ausgelegten Gleitreibbeiwert aufweist.

4. Lochblech (1) nach einem der Ansprüche 1 bis **3,dadurch gekennzeichnet, dass** es als Fahrspurblech ausgestaltet ist.

5. Lochblech (1) nach einem der vorhergehenden Ansprüche, **dadurch gekennzeichnet, dass** die Zurrwiderlagervorrichtung (12) eine größere Biegesteifigkeit in Richtung senkrecht zur Ladefläche (2) aufweist als das Lochblech (1) und/oder dass kräfteaufnehmende Elemente der Zurrwiderlagervorrichtung (12) aus einem anderen Werkstoff hergestellt sind als das Lochblech (1).

6. Lochblech (1) nach einem der vorhergehenden Ansprüche, **dadurch gekennzeichnet, dass** die Zurrwiderlagervorrichtung (12) zwei oder mehr Aufnahmemittel (13) aufweist, welche derart voneinander beabstandet auf der Zurrwiderlagervorrichtung (12) angeordnet sind, dass jedes Aufnahmemittel (13) mit einer der Aussparungen (14) in der Ladefläche (2) in Deckung anordenbar ist.

7. Lochblech (1) nach Anspruch 8, **dadurch gekennzeichnet, dass** der Abstand zwischen den Aufnahmemitteln (13) an eine äußere Abmessung der Ladung (3), insbesondere an einen Raddurchmesser eines Fahrzeugs, angepasst ist.

8. Lochblech (1) nach einem der vorhergehenden Ansprüche, **dadurch gekennzeichnet, dass** die Zurrwiderlagervorrichtung (12) ein Profilelement (15, 23) aufweist.

9. Lochblech (1) nach einem der vorhergehenden Ansprüche, **dadurch gekennzeichnet, dass** die Aufnahmemittel (13) zur formschlüssige Aufnahme des Zurrmittels (5, 6, 7, 8) ausgestaltet sind.

10. Lochblech (1) nach einem der vorhergehenden Ansprüche, **dadurch gekennzeichnet, dass** die Zurrwiderlagervorrichtung (12) gegenüber der Ladefläche (2) verschiebbar angeordnet ist, um die Aufnahmemittel (13) mit unterschiedlichen Aussparungen (14) in der Ladefläche (2) in Deckung zu bringen.

11. Lochblech (1) nach einem der vorhergehenden Ansprüche, **dadurch gekennzeichnet, dass** Befestigungsmittel (21) zum, vorzugsweise sandwichartigen, Befestigen der Zurrwiderlagervorrichtung (12) unterhalb der Ladefläche (2) vorgesehen sind.

12. Motorwagen für Fahrzeugtransporte, **dadurch gekennzeichnet, dass** es mindestens ein Lochblech (1) nach einem der vorhergehenden Ansprüche aufweist.

13. Ladungssicherungssatz, mit mindestens einem Lochblech (1) mit einer Ladefläche (2), auf welche eine Ladung (3) aufbringbar ist, sowie mindestens einem Zurrgurt (5), wobei vorzugsweise mindestens ein Paar Keilvorrichtungen zum Anbringen vor beziehungsweise hinter der Ladung vorgesehen ist, **dadurch gekennzeichnet, dass** das Lochblech (1) nach einem der Ansprüche 1 bis 11 ausgestaltet ist.

## Claims

1. Perforated plate (1), preferably for semitrailers, trailers and/or motor vehicles, in particular for transporting vehicles, comprising a load bed (2) on which a load (3) can be imposed, wherein said perforated plate is provided with at least one lashing brace apparatus (12), arranged beneath the load bed (2), comprising load suspension means (13) for absorbing, by means of lashing means (5, 6, 7, 8), in particular hooks (6, 7, 8) and/or a lashing strap (5), forces that can be produced and that act at right angles to the load bed (2), wherein the load bed (2) comprises at least one cut-out (14) for guiding the lashing means through to the load suspension means (13) of the lashing brace apparatus (12) and wherein the cut-out (14) has a substantially oval shape that is oriented substantially in the longitudinal direction of the perforated plate (1).

2. Perforated plate (1) according to claim 1, **characterised in that** at least one extension of the lashing brace apparatus (12) is larger than a spacing between holes formed in the load bed (2).

3. Perforated plate (1) according to either claim 1 or claim 2, **characterised in that** the load bed (2) has, at least in a region above the lashing brace apparatus (12), a coefficient of sliding friction designed to sufficiently secure the load (3) against slipping on the load bed (2).

4. Perforated plate (1) according to any of claims 1 to 3, **characterised in that** it is designed as a path-width plate.

5. Perforated plate (1) according to any of the preceding claims, **characterised in that** the lashing brace apparatus (12) has greater flexural rigidity in the direction perpendicular to the load bed (2) than the perforated plate (1) and/or **in that** force-absorbing elements of the lashing brace apparatus (12) are made of a different material to that of the perforated plate (1).

6. Perforated plate (1) according to any of the preceding claims, **characterised in that** the lashing brace apparatus (12) comprises two or more load suspension means (13) which are arranged so as to be mutually spaced on the lashing brace apparatus (12) such that each load suspension means (13) can be arranged in congruence with one of the cut-outs (14) in the load bed (2).

7. Perforated plate (1) according to claim 8, **characterised in that** the spacing between the load suspension means (13) is adapted to an external dimension of the load (3), in particular to a wheel diameter of a vehicle.

8. Perforated plate (1) according to any of the preceding claims, **characterised in that** the lashing brace apparatus (12) has a profile element (15, 23).

9. Perforated plate (1) according to any of the preceding claims, **characterised in that** the load suspension means (13) is designed to interlockingly receive the lashing means (5, 6, 7, 8).

10. Perforated plate (1) according to any of the preceding claims, **characterised in that** the lashing brace apparatus (12) is arranged so as to be movable relative to the load bed (2), in order to bring the load suspension means (13) into congruence with different cut-outs (14) in the load bed (2).

11. Perforated plate (1) according to any of the preceding claims, **characterised in that** fastening means (21) are provided for fastening, preferably in a sandwich-like manner, the lashing brace apparatus (12) beneath the load bed (2).

12. Motor vehicle for transporting vehicles, **characterised in that** it comprises at least one perforated plate (1) according to any of the preceding claims.

13. Load securing unit comprising at least one perforated plate (1) that has a load bed (2) on which a load (3) can be imposed, and at least one lashing strap (5), preferably at least one pair of wedge apparatuses being provided for mounting upstream or downstream of the load, **characterised in that** the perforated plate (1) is designed according to any of claims 1 to 11.

## Revendications

1. Tôle perforée (1), de préférence pour des semi-remorques, des remorques et/ou des véhicules à moteur, en particulier pour des transports de véhicules, comprenant une surface de chargement (2), sur laquelle un chargement (3) peut être installé, laquelle est pourvue d'au moins un dispositif de butée d'arrimage (12) disposé sous la surface de chargement (2), pourvu de moyens de réception (13) servant à recevoir des forces pouvant être produites par des moyens d'arrimage (5, 6, 7, 8), en particulier des crochets (6, 7, 8) et/ou une sangle d'arrimage (5), agissant de manière perpendiculaire par rapport à la surface de chargement (2), dans laquelle la surface de chargement (2) présente au moins un évidement (14) servant à faire passer les moyens d'arrimage en direction des moyens de réception (13) du dispositif de butée d'arrimage (12) et dans laquelle l'évidement (14) présente une forme orientée sensiblement dans le sens de la longueur de la tôle perforée (1), sensiblement ovale.

2. Tôle perforée (1) selon la revendication 1, **caractérisée en ce qu'**au moins une extension du dispositif de butée d'arrimage (12) est configurée de manière à être plus grande qu'une distance entre des trous pratiqués dans la surface de chargement (2).

3. Tôle perforée (1) selon la revendication 1 ou 2, **caractérisée en ce que** la surface de chargement (2) présente, au moins dans une zone au-dessus du dispositif de butée d'arrimage (12), un coefficient de friction par glissement prévu pour protéger suffisamment le chargement (3) contre tout glissement sur la surface de chargement (2).

4. Tôle perforée (1) selon l'une quelconque des revendications 1 à 3, **caractérisée en ce qu'**elle est configurée en tant que tôle de voie de circulation.

5. Tôle perforée (1) selon l'une quelconque des revendications précédentes, **caractérisée en ce que** le dispositif de butée d'arrimage (12) présente une résistance à la flexion plus grande dans la direction perpendiculaire à la surface de chargement (2) que la tôle perforée (1), et/ou **en ce que** des éléments de réception de force du dispositif de butée d'arrimage (12) sont fabriqués à partir d'un matériau autre que celui de la tôle perforée (1).

6. Tôle perforée (1) selon l'une quelconque des revendications précédentes, **caractérisée en ce que** le dispositif de butée d'arrimage (12) présente deux moyens de réception (13) ou plus, qui sont disposés sur le dispositif de butée d'arrimage (12) espacés de telle manière que chaque moyen de réception (13) peut être disposé en superposition avec l'un des évidements (14) de la surface de chargement (2).

7. Tôle perforée (1) selon la revendication 8, **caractérisée en ce que** la distance entre les moyens de réception (13) est adaptée à une dimension extérieure du chargement (3), en particulier à un diamètre de roue d'un véhicule.

8. Tôle perforée (1) selon l'une quelconque des revendications précédentes, **caractérisée en ce que** le dispositif de butée d'arrimage (12) présente un élément profilé (15, 23).

9. Tôle perforée (1) selon l'une quelconque des revendications précédentes, **caractérisée en ce que** les moyens de réception (13) sont configurés pour la réception par complémentarité de forme du moyen d'arrimage (5, 6, 7, 8).

10. Tôle perforée (1) selon l'une quelconque des revendications précédentes, **caractérisée en ce que** le dispositif de butée d'arrimage (12) est disposé de manière à pouvoir être coulissé par rapport à la surface de chargement (2) afin d'amener en superposition les moyens de réception (13) avec différents évidements (14) de la surface de chargement (2).

11. Tôle perforée (1) selon l'une quelconque des revendications précédentes, **caractérisée en ce que** sont prévus des moyens de fixation (21) servant à fixer, de préférence en sandwich, le dispositif de butée d'arrimage (12) sous la surface de chargement (2).

12. Véhicule à moteur pour des transports de véhicules, **caractérisé en ce qu'**il présente au moins une tôle perforée (1) selon l'une quelconque des revendications précédentes.

13. Jeu de protection de chargement, comprenant au moins une tôle perforée (1) pourvue d'une surface de chargement (2), sur laquelle un chargement (3) peut être installé, ainsi qu'au moins une sangle d'arrimage (5), dans lequel de préférence au moins une paire de dispositifs à clavette se destine à être installée devant ou derrière le chargement, **caractérisé en ce que** la tôle perforée (1) est configurée selon l'une quelconque des revendications 1 à 11.
